Europäisches Patentamt

European Patent Office

Office européen des brevets

(11) Veröffentlichungsnummer: **0 219 787 B1**

(12) **EUROPÄISCHE PATENTSCHRIFT**

(45) Veröffentlichungstag der Patentschrift: **15.04.92**

(21) Anmeldenummer: **86114139.8**

(22) Anmeldetag: **13.10.86**

(51) Int. Cl.5: **C01G 41/00**, C01G 39/00, C01G 41/02, C01G 39/02, C22B 34/34, C22B 34/36

(54) **Verfahren zur Erzeugung von reiner Wolframsäure und/oder Molybdänsäure (wasserlösliche Isopolysäuren) aus mit insbesondere Silicium-, Phosphor-, Arsenionen usw. verunreinigten - alkalischen Wolfram- und/oder Molybdän-Metallsalz-Lösungen.**

(30) Priorität: **15.10.85 HU 398285**

(43) Veröffentlichungstag der Anmeldung:
**29.04.87 Patentblatt 87/18**

(45) Bekanntmachung des Hinweises auf die Patenterteilung:
**15.04.92 Patentblatt 92/16**

(84) Benannte Vertragsstaaten:
**AT BE CH DE ES FR GB GR IT LI LU NL SE**

(56) Entgegenhaltungen:
**DE-A- 2 228 065    GB-A- 2 073 780
US-A- 3 193 347    US-A- 3 829 550
US-A- 3 947 332    US-A- 4 203 822**

**CHEMICAL ABSTRACTS, Band 98, Nr. 6, Zusammenfassung Nr. 46013h, Columbus, Ohio, US; A.A. BLOKHIN et al.: "Ion-exchange purification of ammonium molybdate solutions", & ZH. PRIKL. KHIM. (LENINGRAD), 55(11), 2583-6**

(73) Patentinhaber: **MTA MÜSZAKI FIZIKAI KUTATO INTEZETE
Foti ut 56
Budapest IV(HU)**

(72) Erfinder: **Vadasdi, Károly, Dr.
Korong u. 31/b
HU-1145 Budapest(HU)**
Erfinder: **Olàh, Ruben
Beke ter 7/b
HU-2030 Erd(HU)**
Erfinder: **Bartha, Lászl , Dr.
Toldy f. u. 76-78
HU-1015 Budapest(HU)**

(74) Vertreter: **Hoffmann, Klaus, Dr. rer. nat. et al
Hoffmann . Eitle & Partner Patentanwälte
Postfach 81 04 20 Arabellastrasse 4
W-8000 München 81(DE)**

**CHEMICAL ABSTRACTS, Band 97, Nr. 6, Zu-sammenfassung Nr. 42017u, Columbus, Ohio, US; A.A. BLOKHIN et al.: "Use of ion exchangers for purification of ammonium tungstate solutions"**

## Beschreibung

Die Erfindung betrifft ein Verfahren zur Reinigung von alkalischen bzw. Ammonium-Wolframat- und/oder Molybdat-Lösungen, welche mit sich bei der Alkalisierung bzw. Lösung von W- und/oder Mo-haltigen Stoffen bildenden Hydrolisierionen (insbesondere Silicium, Phosphor, Arsen, Zinn, Antimon, Vanadium, Tantal) verunreinigt sind, zur Erzeugung von Wolfram- und/oder Molybdänsäure und zur Rückgewinnung des Laugengehaltes durch Elektrodialyse, wobei die Ansäuerung der Ausgangslösung mit dem das Endprodukt der Dialyse bildenden Wolfram- bzw. Molybdänsäure durchgeführt wird.

Es ist bekannt, daß sich die bei der Alkalisierung von wolfram- und/oder molybdänhaltigen Stoffen bildenden alkalischen (insbesondere Natrium) oder Ammonium-Wolframat- bzw. Molybdat-Lösungen mit verschiedenen Hydrolisierionen (Silicium, Phosphor, Arsen, usw.) verunreinigt sind. Die Lösung ist vor der Weiterverarbeitung zu reinigen. Gemäß dem bekannten Reinigungsverfahren wird die alkalische Lösung (pH 13) z.B. $Na_2WO_4$-Lösung, mit irgendeiner Säure (z. B. $H_2SO_4$, HCL) angesäuert (z.B. auf pH 9) und danach ein Aluminiumion hinzugefügt; der entstehende $Al(OH)_3$-Niederschlag mit großer Fläche bindet die sich in der Lösung befindenden Verunreinigungen.

Nach der US-A-3829550 wird hierbei mit Fe-$(NO_3)_3$ als zusätzlichem Fällungshilfsmittel und Salpetersäure als Säure gearbeitet.

Der Niederschlag ist durch Filtration entfernbar. Aus der verbleibenden reinen Lösung wird dann mit irgendeinem Verfahren W-Säure erzeugt. Aus der gereinigten alkalischen oder Ammonium-Wolframat-Lösung kann vorteilhaft durch Kationentausch-Elektrodialyse Wolframsäure hergestellt werden, wobei auch die Aufschlusslauge zurückgewonnen werden kann (vgl, z.B. die DE-A-2 228 065).

Dieses bekannte Verfahren weist mehrere nachteilige Eigenschaften auf; das sind einerseits Nachteile wirtschaftlicher Natur, da zur Ansäurung eine reine Säure erforderlich ist, wodurch die Kosten des Verfahrens steigen, und andererseits ergeben sich weitere Verunreinigungsquellen, da Sulfat- bzw. Chlorionen in die Lösung geraten.

Das Ziel der Erfindung besteht in der Entwicklung eines kostengünstigeren reinen Verfahrens, welches von den oben erwähnten Mängeln frei ist.

Die Erfindung beruht auf der Erkenntnis, daß das Ansäuren der alkalischen bzw. Ammonium-Wolframat- oder Molybdat-Lösung auch mit der sich nach der Elektrodialyse bildenden Wolfram- bzw. Molybdänsäure durchgeführt werden kann.

Die Erfindung wird nachstehend anhand eines Durchführungsbeispieles näher erläutert:

Der Aufschluß des W-haltigen Stoffes wurde mit Natronlauge durchgeführt und dabei wurde eine verunreinigte Natriumwolframat-Lösung ($Na_2WO_4$) erhalten. Der pH-Wert der Losung betrug 13. Verunreinigende Stoffe waren Silicium (Si) und Phosphor (P). Als erster Verfahrenschritt der Reinigung wurde diese $Na_2WO_4$-Lösung auf einen pH-Wert von 9 durch Zufügen von reiner W-Säure angesäuert. Im allgemeinen ist der verunreinigten Lösung die Wolframsäure in einem solchen Verhältnis zuzufügen - in Abhängigkeit von den verunreinigenden Ionen -, daß der pH-Wert der entstehenden Lösung eine maximale Ausfällung (Hydrolyse) des zu entfernenden Ions hervorruft.

Erforderlichenfalls werden der Lösung $Al^{+3}$-Ionen zugefügt, um zu erreichen, daß das entstehende Aluminiumhydroxid ($Al(OH)_3$) die Verunreinigung mit seiner großen Fläche abbindet. Der entstandene Niederschlag wird durch Filtration entfernt. Nach diesem Verfahrenschritt wird eine gereinigte Natriumwolframat-Lösung erhalten.

Aus der Natriumwolframat-Lösung wird mit Hilfe von Kationentausch-Elektrodialyse Wolframsäure (pH 3) hergestellt. Bei diesem Verfahrensschritt kann die Natronlauge zurückgewonnen und in dem Aufschlussverfahren erneut verwendet werden.

Ein Teil der reinen Wolframsäure gelangt erneut in den Prozess, da damit in dem folgenden Zyklus die verunreinigte Natriumwolframat-Lösung angesäuert wird. Der andere, größere Teil der Wolframsäure bildet das Endprodukt des erfindungsgemäßen Verfahrens.

Aus den obigen Ausführungen ist ersichtlich, daß das Verfahren die Zielstellung der Erfindung realisiert, da bei dem Ansäuren keine fremden Zusatzstoffe zugefügt werden.

In der Beschreibung werden unter Wolframsäure und Molybdänsäure die wasserlöslichen Isopolysäuren dieser beiden Metalle verstanden.

## Patentansprüche

1. Verfahren zur Erzeugung von reiner Wolfram- und/oder Molybdänsäure aus -mit insbesondere Silicium-, Phosphor-, Arsen-, Zinn-, Antimon-, Vanadium- und Tantalionen verunreinigten-alkalischen Wolfram- und/oder Molybdän-Metallsalz-Lösungen, wobei die Lösung angesäuert wird, dann der entstandene Niederschlag filtriert und aus der reinen Lösung durch Elektrodialyse Wolfram- und/oder Molybdänsäure hergestellt wird, dadurch **gekennzeichnet,** daß die Einstellung des zum Ausfällen der Hydrolisierionen erforderlichen pH-Wertes durch Zumischen von mittels Kationentausch-Elektrodialyse alkalibefreiten Wolfram-und/oder Molybdänsäure durchgeführt wird, wobei ein Teil der nach der Elektrodialyse gewonnenen Wolfram-und/oder Molybdänsäure bei dem Reinigungsverfahren erneut verwendet wird.

2. Verfahren nach Anspruch 1, dadurch **gekennzeichnet**, daß nach der Ansäuerung zur Beschleunigung des Niederschlagausfalles der Lösung Aluminiumionen zugeführt werden.

## Claims

1. Process for producing pure tungstic and/or molybdic acid from alkaline tungsten and/or molybdenum metal salt solutions contaminated in particular with silicon, phosphorus, arsenic, tin, antimony, vanadium and tantalum ions, whereby the solution is acidified, the resultant precipitate is filtered, and tungstic and/or molybdic acid is obtained from the pure solution by electrodialysis, characterised in that the pH value necessary to precipitate the hydrolysis ions is adjusted by adding tungstic and/or molybdic acid freed from alkali by means of cation-exchange electrodialysis, wherein part of the tungstic and/or molybdic acid obtained after the electrodialysis is re-used in the purification process.

2. Process according to Claim 1, characterized in that after the acidification aluminium ions are added to the solution in order to accelerate precipitation.

## Revendications

1. Procédé pour la production d'acide tungstique et/ou d'acide molybdique pur à partir de solutions de tungstates et/ou de molybdates alcalins contaminées en particulier par des ions de silicium, phosphore, arsenic et d'antimoine, vanadium et tantale, dans lequel la solution est acidifiée, puis te précipité formé est filtré et l'acide tungstique et/ou l'acide molybdique est préparé à partir de la solution pure par électrodialyse, caractérisé en ce que le réglage du pH nécessaire pour la précipitation des ions hydrolysables est mis en oeuvre par mélange d'acide tungstique et/ou d'acide molybdique débarrassés d'alcali par échange cationique-électrodialyse, dans lequel une partie de l'acide tungstique et/ou de l'acide molybdique obtenu par électrodialyse est réutilisée dans le procédé de purification.

2. Procédé selon la revendication 1, caractérisé en ce que l'on ajoute à la solution des ions aluminium après l'acidification pour l'accélération de la précipitation du précipité.